(19) Europäisches Patentamt

European Patent Office

Office européen des brevets

(11) Veröffentlichungsnummer : **0 396 877 B1**

## (12) EUROPÄISCHE PATENTSCHRIFT

(45) Veröffentlichungstag der Patentschrift :
**28.10.92 Patentblatt 92/44**

(51) Int. Cl.⁵ : **C10B 31/02**

(21) Anmeldenummer : **90104973.4**

(22) Anmeldetag : **16.03.90**

---

(54) Füllwagen für eine Koksofenbatterie.

---

(30) Priorität : **22.04.89 DE 3913320**

(43) Veröffentlichungstag der Anmeldung :
**14.11.90 Patentblatt 90/46**

(45) Bekanntmachung des Hinweises auf die
Patenterteilung :
**28.10.92 Patentblatt 92/44**

(84) Benannte Vertragsstaaten :
**AT BE DE ES FR GB IT NL SE**

(56) Entgegenhaltungen :
**EP-A- 0 001 363**
**DE-A- 2 437 138**
**DE-B- 2 510 097**

(73) Patentinhaber : **HARTUNG, KUHN & CO.**
**MASCHINENFABRIK GMBH**
**Altendorfer Strasse 120**
**W-4300 Essen 1 (DE)**

(72) Erfinder : **Schröter, Horst**
**Berliner Höhe 68**
**W-4069 Viersen 1 (DE)**
Erfinder : **Andreas, Horst**
**Schweidnitzerstrasse 64**
**W-4000 Düsseldorf (DE)**

(74) Vertreter : **Hattwig, Henning, Dr.**
**Krupp-Koppers GmbH Patentabteilung**
**Altendorfer Strasse 120 Postfach 10 22 51**
**W-4300 Essen 1 (DE)**

## Beschreibung

Die Erfindung betrifft einen Füllwagen zum Füllen von Kohle in die Ofenkammern einer Koksofenbatterie, bei dem ein an einem Kohlebehälter fest angebrachter, unbeweglicher Füllstutzen von einem teleskopartig verschiebbaren Füllrohr dicht umschlossen ist, wobei das Füllrohr mit seinem unteren Ende bis auf die Füllochrahmen der Füllöcher der Koksofenbatterie abgesenkt werden kann.

Beim Betrieb eines derartigen Füllwagens ist es nach den heute geltenden Vorschriften zur Reinhaltung der Luft unumgänglich, die beim Füllen der Ofenkammern entweichenden, staubbeladenen Gase aufzufangen und in die Vorlage der Koksofenbatterie zu leiten. Das erfordert eine einwandfreie Abdichtung zwischen dem beweglichen Füllrohr und dem unbeweglichen Füllstutzen. Wie sich aus der DE-AS 25 10 097 und der DE-AS 25 59 390 ergibt, werden hierfür bisher vor allem Dichtelemente in Form eines Faltenbalges verwendet, wobei der Faltenbalg aus Federstahl bzw. drahtverstärktem Asbest oder einem anderen hitzebeständigen Fasermaterial bestehen kann.

Diese auch Kompensatoren genannten Bauteile haben neben der Abdichtung auch die vollständige oder teilweise Abdeckung des Hubes des beweglichen Füllrohres zu bewerkstelligen. Wegen ihrer Konstruktion und wegen des Materials, aus dem sie bestehen, sind die Kompensatoren sehr teuer und sehr empfindlich gegen höhere Temperaturen sowie korrodierende, staubbeladene Gase und lassen nur einen geringen Hub in der Größenordnung von ca. 25 mm zu.

Da das untere Ende des Füllrohres bei jedem Füllvorgang dicht auf dem Füllochrahmen des jeweiligen Fülloches aufsitzen muß, sind je nach Beschaffenheit und Lage dieser Füllochrahmen unterschiedliche Hubbewegungen des Füllrohres in vertikaler Richtung erforderlich. Die Größe der erforderlichen Hubbewegungen kann dabei durchaus in einem Bereich liegen, für den ein Kompensator in der Regel nicht ausgelegt ist. Dies ist insbesondere bei alten Koksofenbatterien der Fall, bei denen zum Teil beträchtliche Höhenunterschiede in der Lage der einzelnen Füllochrahmen auftreten können. Dies führt dann dazu, daß das Füllrohr nicht mehr in allen Fällen dicht auf den Füllochrahmen abgesenkt werden kann. Die dadurch bedingte Undichtigkeit zwischen Füllrohr und Füllochrahmen hat selbstverständlich einen unerwünschten Austritt von Füllgas in die Atmosphäre zur Folge. Eine mit Gewalt erzwungene Abdichtung führt dagegen zu einer Beschädigung oder gar Zerstörung des Kompensators.

In der DE-A-24 37 138 wird eine Stopfbuchse zur Abdichtung von gegeneinander verdrehbaren und/oder axial verschiebbaren Rohren beschrieben, die einen Druckflansch aufweist, in dem ein Druckring und eine Stopfbuchspackung angeordnet sind. Bei dieser vorzugsweise zum Einsatz bei tiefen Temperaturen geeigneten Konstruktion wirkt ein Druckmedium auf den Druckring ein, der seinerseits den Druck auf die Stopfbuchspackung überträgt, die für die Abdichtung zwischen den Rohren sorgt. Bei der Stopfbuchspackung kann es sich dabei vorzugsweise um einen Gewebeschlauch handeln, der mit einem feinen Pulver, wie z.B. Molybdänsulfid oder Graphit, gefüllt ist.

Der Erfindung liegt die Aufgabe zugrunde, zur Vermeidung der weiter oben beschriebenen Nachteile den Füllwagen der eingangs genannten Art dahingehend zu verbessern, daß auch bei größeren Höhenunterschieden zwischen den einzelnen Füllochrahmen eine einwandfreie Abdichtung zwischen dem Füllrohr und dem Füllstutzen einerseits sowie dem unteren Ende des Füllrohres und dem jeweiligen Füllochrahmen andererseits gewährleistet ist.

Die der Lösung dieser Aufgabe dienende Ausgestaltung des Füllwagens der eingangs genannten Art ist erfindungsgemäß dadurch gekennzeichnet, daß am oberen Ende des Füllrohres ein Gehäuse angeordnet ist, in dem sich ein den Füllstutzen umgebender und mit dem Füllrohr verschiebbarer elastischer Dichtring befindet, der während des Füllvorganges pneumatisch oder mechanisch so gegen den Füllstutzen gepreßt wird, daß eine Abdichtung zwischen Füllrohr und Füllstutzen gewährleistet ist.

Der Dichtring kann dabei ein rohrförmiges, kissenförmiges, U-förmiges, rechteckiges oder quadratisches Profil aufweisen und wird aus einem elastischen, bevorzugt hitzebeständigen Material ausgeführt, wie beispielsweise Edelstahl.

Zur Steigerung der Flexibilität kann der Dichtring segmentartig aufgebaut oder mit einem Schlitz versehen sein. Auch Metallringe in Gestalt von Kolbenringen, die durch eine Lasche zusammengehalten werden, sind ebenso verwendbar, wie eine aufblasbare metallische Membran. Schließlich ist es auch möglich, anstelle eines einzigen Dichtringes deren mehrere zu verwenden.

Weitere Einzelheiten der erfindungsgemäßen Konstruktion ergeben sich aus den vorliegenden Unteransprüchen und sollen nachfolgend an Hand der Abbildungen erläutert werden. Hierbei zeigen:

Fig. 1 einen Schnitt in schematischer Darstellung durch die Auslaufeinrichtung des Füllwagens mit der erfindungsgemäßen Abdichteinrichtung,

Fig. 2 einen Schnitt durch das am Füllrohr angebrachte Gehäuse mit dem darin befindlichen Dichtring und

Fig. 3 eine Draufsicht auf eine andere Ausführungsform des Dichtringes mit mechanischer Anpreßvorrichtung.

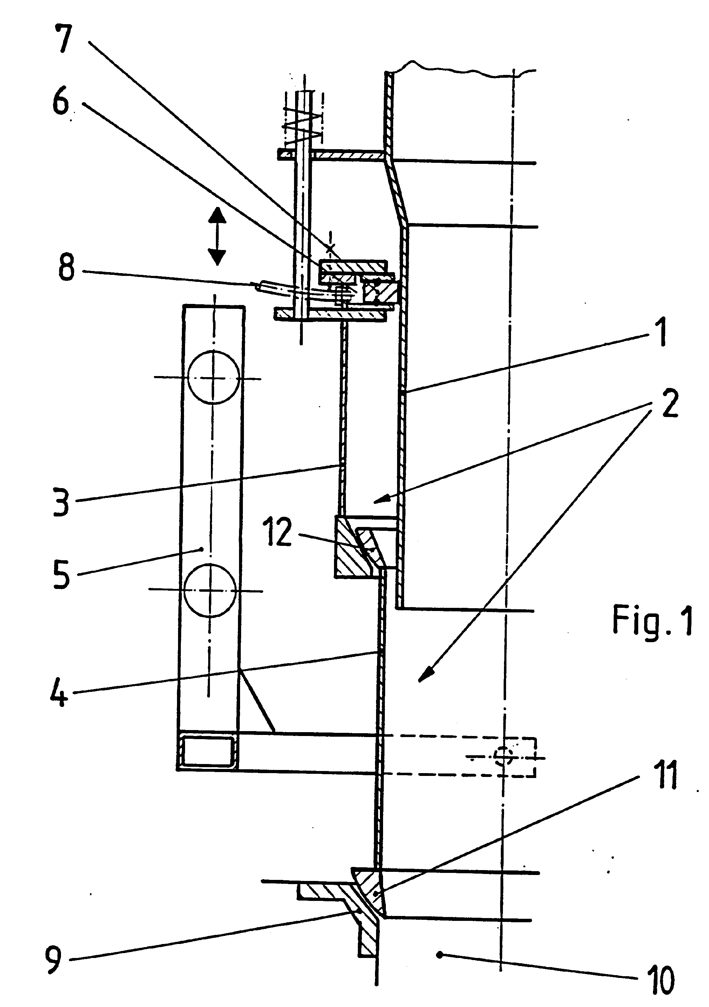

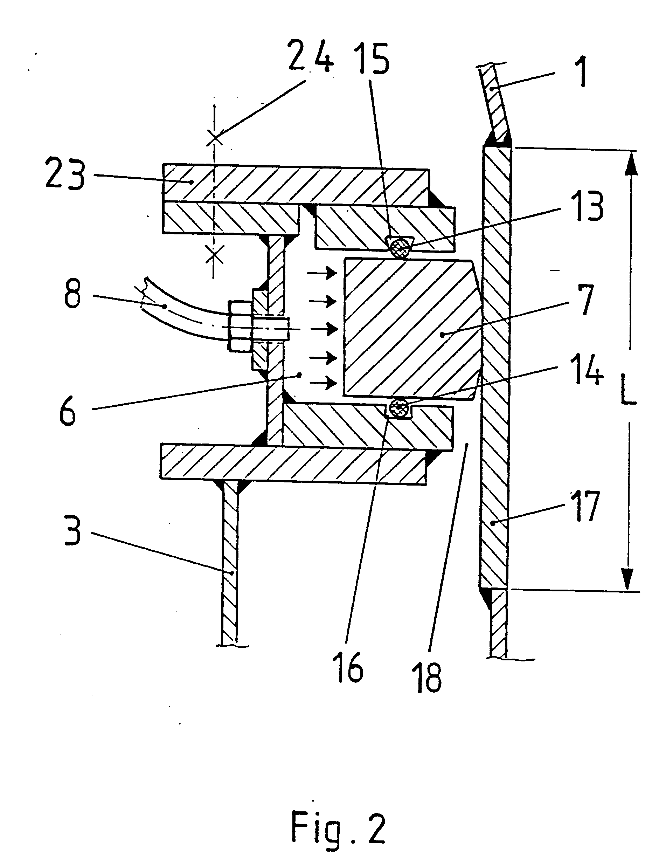

Bei dem in Fig. 1 dargestellten Schnitt ist der am Kohlebehälter des Füllwagens angebrachte, unbewegliche Füllstutzen mit 1 bezeichnet. Der Kohlebehälter sowie weitere Einzelheiten des Füllwagens sind in der Abbildung nicht dargestellt, da sie für die Erläuterung der vorliegenden Erfindung ohne Bedeutung sind. Es kann sich hierbei um zum Stande der Technik gehörende Ausführungsformen handeln. Der Kohlebehälter ist in jedem Falle oberhalb des Füllstutzens 1 angeordnet, so daß die Kohle unter dem Einfluß der Schwerkraft in den Füllstutzen 1 gelangen und durch diesen aus dem Kohlebehälter fließen kann. Da der Füllstutzen 1 und das diesen umgebende Füllrohr 2 einen kreisförmigen Querschnitt aufweisen, ist außerdem in den Fig. 1 und 2 nur die linke Hälfte der jeweiligen Anlagenteile dargestellt. Die rechte Hälfte entspricht jedoch in symmetrischer Anordnung genau der auf der linken Hälfte dargestellten Ausführungsform. Das Füllrohr 2 ist teleskopartig aus den Rohrstücken 3 und 4 zusammengesetzt und kann mit der Hebevorrichtung 5 in senkrechter Richtung gehoben und abgesenkt werden, was in der Abbildung durch den Doppelpfeil angedeutet wird. In der Praxis kann das Füllrohr 2 selbstverständlich auch aus mehr als zwei Rohrstücken teleskopartig zusammengesetzt sein. Am oberen Ende des Füllrohres 2 befindet sich das Gehäuse 6 mit dem darin befindlichen Dichtring 7, der den Füllstutzen 1 umgibt. Der innere Durchmesser des Dichtringes 7 ist im entspannten Zustand etwas größer als der äußere Durchmesser des Füllstutzens 1, so daß er ohne Schwierigkeiten in senkrechter Richtung auf dem Füllstutzen 1 entsprechend der Bewegung des Füllrohres 2 verschoben werden kann. Die Leitung 8 dient der Zufuhr von Preßluft oder eines anderen Druckgases in das Gehäuse 6. Auf weitere Einzelheiten wird weiter unten im Zusammenhang mit Fig. 2 eingegangen werden. Vor Beginn des Füllvorganges wird das Füllrohr 2 mittels der Hebevorrichtung 5 auf den Füllochrahmen 9 des Füllloches 10 der jeweils zu beschickenden Ofenkammer abgesenkt. Am unteren und oberen Ende des Rohrstückes 4 sind die Dichtringe 11 und 12 angeordnet, welche für eine gasdichte Abdichtung mit dem Füllochrahmen 9 und dem Rohrstück 3 sorgen. Gleichzeitig wird der Dichtring 7 pneumatisch oder mechanisch so gegen den Füllstutzen 1 gepreßt, daß eine gasdichte Abdichtung zwischen ihm und dem Füllrohr 2 gewährleistet ist. Damit wird sichergestellt, daß während des Füllvorganges keine Gase aus dem System entweichen können.

Fig. 2 zeigt in vergrößerter Darstellung weitere Einzelheiten des Gehäuses 6 mit dem darin befindlichen Dichtring 7. Selbstverständlich haben dabei die mit Fig. 1 übereinstimmenden Bezugszeichen die gleiche Bedeutung wie dort. Das Gehäuse 6 wird in diesem Falle nach oben hin durch die Deckplatte 23 verschlossen, die durch die Schraubverbindung 24 oder auf andere Weise lösbar mit dem übrigen Gehäuse 6 verbunden ist. Dadurch kann man im Bedarfsfalle nach Entfernung der Deckplatte 23 den Dichtring 7 auswechseln. Bei der in der Abbildung dargestellten Ausführungsform sind auf der Ober- und Unterseite des Dichtringes 7 zusätzlich noch die Gleitringdichtungen 13 und 14 angeordnet, die in den Führungsrillen 15 und 16 liegen. Außerdem ist bei dieser Ausführungsform in den Füllstutzen 1 das Rohrstück 17 eingeschweißt. Dieses Rohrstück 17 besteht aus dickwandigem, Wärmeverwerfungen verhinderndem Material, wie beispielsweise Kesselbaustahl, und hat eine mechanisch bearbeitete glatte Oberfläche, durch die eine einwandfreie Abdichtung durch den Dichtring 7 gewährleistet wird. Die Länge L und die Lage des Rohrstückes 17 entsprechen dabei genau der Länge und Lage der erforderlichen senkrechten Hubbewegung des Füllrohres 2, so daß sich der Dichtring 7 während dieser Hubbewegung immer auf der glatten Oberfläche des Rohrstückes 17 hin- und herbewegt. Sobald das Füllrohr 2 vor Beginn des eigentlichen Füllvorganges auf den Füllochrahmen 9 abgesenkt worden ist, wird über die Leitung 8 Preßluft oder ein anderes Druckgas in das Gehäuse 6 eingeleitet, das den Dichtring 7 in Pfeilrichtung gegen das Rohrstück 17 bzw. das Füllrohr 2 preßt. Damit wird die erforderliche Abdichtung zwischen dem Füllrohr 2 und dem Füllstutzen 1 gewährleistet, so daß die beim Füllen entstehenden Gase nicht über den Spalt 18 in die Atmosphäre entweichen können. Der Austritt dieser Gase wird außerdem zusätzlich dadurch beeinträchtigt bzw. verhindert, daß das über die Leitung 8 zugeführte gasförmige Medium einen wesentlich höheren Druck aufweist als die aus dem Fülloch 10 aufsteigenden Gase. Die Betriebssicherheit der erfindungsgemäßen Konstruktion ist deshalb auch dann gewährleistet, wenn zwischen dem Gehäuse 6 und dem Dichtring 7 eine gewisse Undichtigkeit besteht. Nach Beendigung des Füllvorganges wird das Druckgas wieder aus dem Gehäuse 6 abgelassen und der Dichtring 7 damit entspannt.

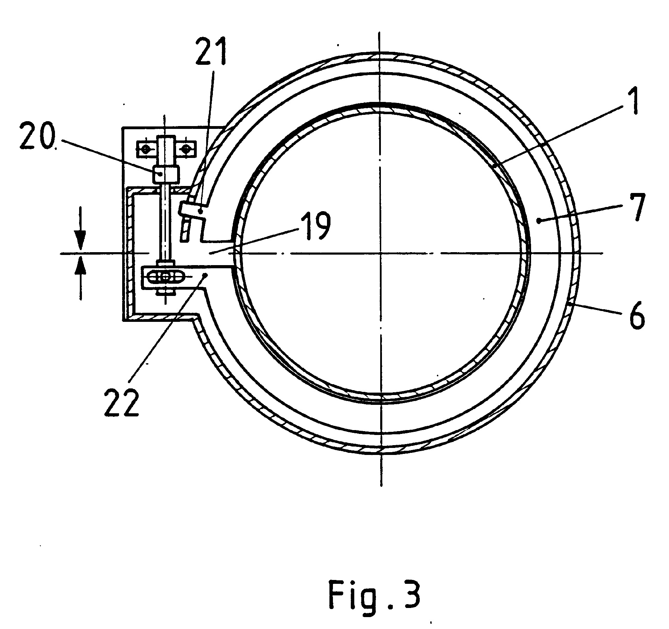

Fig. 3 zeigt schließlich eine andere Ausführungsform des Dichtringes 7, der in diesem Falle auf mechanischem Wege gegen den Füllstutzen 1 gepreßt wird. Hierbei ist der Dichtring 7 nicht vollständig geschlossen, sondern weist im entspannten Zustand noch den freien Spalt 19 auf, wobei gleichzeitig zwischen dem Dichtring 7 und dem Füllstutzen 1 noch der für die Hubbewegung erforderliche Spielraum besteht. Zur Abdichtung wird der Dichtring 7 durch den Zylinder 20 in Pfeilrichtung zusammengezogen und damit fest gegen den Füllstutzen 1 gepreßt, wobei gleichzeitig der freie Spalt 19 geschlossen wird. Das eine Ende des Dichtringes 7 ist hierbei über die Lasche 21 am Gehäuse 6 und das andere Ende über die Lasche 22 am Zylinder 20 befestigt. Der Antrieb des Zylinders 20 kann durch einen Motor, aber auch hydraulisch oder pneumatisch erfolgen.

Durch Anwendung der erfindungsgemäßen Konstruktion gelingt es, die eingangs geschilderten Nachteile zu vermeiden, wobei auch größere Höhenunterschiede in der Lage der einzelnen Füllochrahmen überbrückt werden können und gleichzeitig die erforderliche Abdichtung zwischen Füllochrahmen und Füllrohr gewahrt bleibt. Die erfindungsgemäße Konstruktion zeichnet sich hierbei außerdem durch eine einfache Bauweise mit entsprechend niedrigen Bau- und Wartungskosten aus.

**Patentansprüche**

1. Füllwagen zum Füllen von Kohle in die Ofenkammern einer Koksofenbatterie, bei dem ein an einem Kohlebehälter fest angebrachter, unbeweglicher Füllstutzen von einem teleskopartig verschiebbaren Füllrohr dicht umschlossen ist, wobei das Füllrohr mit seinem unteren Ende bis auf die Füllochrahmen der Füllöcher der Koksofenbatterie abgesenkt werden kann, dadurch gekennzeichnet, daß am oberen Ende des Füllrohres (2) ein Gehäuse (6) angeordnet ist, in dem sich ein dem Füllstutzen (1) umgebender und mit dem Füllrohr (2) verschiebbarer, elastischer Dichtring (7) befindet, der während des Füllvorganges pneumatisch oder mechanisch so gegen den Füllstutzen (1) gepreßt wird, daß eine Abdichtung zwischen Füllrohr (2) und Füllstutzen (1) gewährleistet ist.

2. Füllwagen nach Anspruch 1, dadurch gekennzeichnet, daß der innere Durchmesser des Dichtringes (7) im entspannten Zustand etwas größer ist als der äußere Durchmesser des Füllstutzens (1).

3. Füllwagen nach den Ansprüchen 1 und 2, dadurch gekennzeichnet, daß der Dichtring (7) im entspannten Zustand einen freien Spalt (19) aufweist und im Betriebszustand mittels eines Zylinders (20) zusammengepreßt wird.

4. Füllwagen nach den Ansprüchen 1 bis 3, dadurch gekennzeichnet, daß der Dichtring (7) an seiner Ober- und Unterseite Gleitringdichtungen (13, 14) aufweist, die in den Führungsrillen (15, 16) des Gehäuses (6) liegen.

5. Füllwagen nach den Ansprüchen 1 bis 4, dadurch gekennzeichnet, daß anstelle eines einzigen Dichtringes (7) deren mehrere verwendet werden.

6. Füllwagen nach den Ansprüchen 1 bis 5, dadurch gekennzeichnet, daß in den Füllstutzen (1) ein Rohrstück (17) aus einem Wärmeverwerfungen verhindernden Material eingeschweißt ist, das eine mechanisch bearbeitete glatte Oberfläche aufweist, wobei die Länge (L) und Lage dieses Rohrstückes (17) der Länge und Lage der erforderlichen Hubbewegung des Füllrohres (2) entspricht.

7. Füllwagen nach den Ansprüchen 1 bis 6, dadurch gekennzeichnet, daß das Gehäuse (6) mit einer Leitung (8) für die Zufuhr von Preßluft oder eines anderen unter erhöhtem Druck stehenden gasförmigen Mediums versehen ist.

**Claims**

1. Charging carriage for charging coal into the oven chambers of a battery of coke ovens, in which carriage a fixed charging connection firmly attached to a coal container is closely surrounded by a charging pipe which can be displaced in telescopic manner, it being possible to lower the lower end of the charging pipe as far as the charging hole frame of the charging holes of the battery of coke ovens, characterized in that a casing (6) is arranged at the upper end of the charging pipe (2), in which casing an elastic sealing ring (7) surrounding the charging connection (1) and displaceable with the charging pipe (2) is located, which sealing ring (7) is pressed pneumatically or mechanically against the charging connection (1) during the charging procedure in such a way that a seal is ensured between the charging pipe (2) and the charging connection (1).

2. Charging carriage according to Claim 1, characterized in that the inner diameter of the sealing ring (7) is somewhat larger in the unloaded condition than the outer diameter of the charging connection (1).

3. Charging carriage according to Claims 1 and 2, characterized in that the sealing ring (7) has a free gap (19) in the unloaded condition and is pressed together by means of a cylinder (20) in the operating condition.

4. Charging carriage according to Claims 1 to 3, characterized in that the sealing ring (7) has sliding ring seals (13, 14) on its upper and lower surfaces, which sliding ring seals (13, 14) are located in the guide grooves (15, 16) of the casing (6).

5. Charging carriage according to Claims 1 to 4, characterized in that a plurality of sealing rings (7) are used instead of a single one.

6. Charging carriage according to Claims 1 to 5, characterized in that a pipe piece (17) of a material resistant to thermal distortion is welded into the charging connection (1), this pipe piece (17) having a mechanically machined smooth surface, the length (L) and position of this pipe piece (17) corresponding to the length and position of the necessary stroke movement of the charging pipe (2).

7. Charging carriage according to Claims 1 to 6, characterized in that the casing (6) is provided with a pipe (8) for the supply of compressed air or another gaseous medium under increased pressure.

**Revendications**

1. Chariot de chargement destiné à charger du charbon dans les chambres de four d'une batterie de fours à coke, sur lequel une tubulure de chargement fixe, solidairement montée sur une soute à charbon, est étroitement entourée par une lance de chargement pouvant coulisser d'une manière télescopique, la lance de chargement pouvant être abaissée par son extrémité inférieure jusque sur les cadres des bouches de chargement de la batterie de fours à coke, caractérisé par le fait qu'à l'extrémité haute de la lance (2) de chargement est prévu un boîtier (6) dans lequel se trouve un anneau (7) d'étanchéité élastique qui, se déplaçant avec la lance (2) de chargement et enserrant la tubulure (1) de chargement, est pressé pneumatiquement ou hydrauliquement contre la tubulure (1) de chargement pendant l'opération de chargement, à un point tel que l'étanchéité entre lance (2) de chargement et tubulure (1) de chargement est garantie.

2. Chariot de chargement suivant la revendication 1, caractérisé par le fait que le diamètre intérieur de l'anneau (7) d'étanchéité dans son état détendu est un peu plus grand que le diamètre extérieur de la tubulure (1) de chargement.

3. Chariot de chargement suivant les revendications 1 et 2, caractérisé par le fait que l'anneau (7) d'étanchéité présente dans son état hors contrainte une fente (19) libre et qu'il est resserré au moyen d'un vérin (20) dans son état de service.

4. Chariot de chargement suivant les revendications 1 à 3, caractérisé par le fait que l'anneau (7) d'étanchéité présente sur sa face supérieure et sa face inférieure des garnitures étanches (13, 14) à anneau glissant qui sont placées dans les rainures (15, 16) de guidage du boîtier (6).

5. Chariot de chargement suivant les revendications 1 à 4, caractérisé par le fait qu'au lieu d'un seul anneau (7) d'étanchéité, on en utilise plusieurs.

6. Chariot de chargement suivant les revendications 1 à 5, caractérisé par le fait que dans la tubulure (1) de chargement est soudé un élément (17) de tube en un matériau empêchant les gauchissements par la chaleur qui présente une surface mécaniquement usinée et lisse, la longueur (L) et la position dudit élément (17) de tube correspondant à la longueur et à la position du mouvement de manoeuvre nécessaire de la lance (2) de chargement.

7. Chariot de chargement suivant les revendications 1 à 6, caractérisé par le fait que le boîtier (6) muni d'une conduite (8) pour l'arrivée d'air comprimé ou de tout autre fluide gazeux placé sous une pression supérieure.

Fig. 1

Fig. 2

Fig. 3